# EUROPEAN PATENT APPLICATION

(11) **EP 4 279 700 A1**
(43) Date of publication of application: **22.11.2023**
(21) Application number: 23382394.7
(22) Date of filing: 27.04.2023
(51) Int. Cl.: E06B 9/15

(54) **ROLLER SHUTTER WITH SLATS HAVING PHOTOVOLTAIC PANELS**

(30) Priority: 21.05.2022 ES 202230852 U; 26.11.2022 ES 202231982 U
(71) Applicant: López Fuentes, Guillermo Alfonso, 37188 Salamanca (ES)
(72) Inventor: López Fuentes, Guillermo Alfonso, 37188 Salamanca (ES)
(74) Representative: González López-Menchero, Álvaro Luis

(57) **Abstract**

Photovoltaic blind comprising a plurality of slats (1) comprising at least one photovoltaic panel (2) oriented towards the exterior of the home, capable of converting solar radiation into electrical energy, which is transferred to electrical storage means, where the photovoltaic panel is inclined with respect to the slats, or the slats at their ends are joined by means of stops via an axis, so that the stops (8) slide along guides (11) subdivided into several sections so that they remain articulated with each other, allowing the structure of the slats and the guides (11) to be able to separate from the window (5) and be oriented at an angle between 0° and 90° with respect to the vertical.

## Description

### OBJECT OF THE INVENTION

The object of the present invention, as the title of the invention establishes, is a photovoltaic blind capable of transforming solar radiation into electricity. It is an innovation that within current techniques provides unknown advantages until now. In addition, in a complementary way, the photovoltaic blind has the particularity of being adjustable at a certain angle.

The present invention belongs to the housing and electrical self-consumption sector. This invention refers to a photovoltaic blind, which takes advantage of solar radiation, converting it into electrical energy and, in a complementary way, the entire blind can be adjustable to capture solar radiation more in a more efficient way.

### BACKGROUND TO THE INVENTION

As a reference to the current state of the technique, it should be noted that, although various blind designs are known, at least by the applicant, none that presents technical, structural and constituent characteristics equal or similar to those presented by the applicant are known.

### DESCRIPTION OF THE INVENTION

The invention claimed here makes it possible to take advantage of sunlight by converting it into electrical energy, installing a photovoltaic system in the slats of the blinds.

Because one of the main functions of these elements is to protect homes and buildings from direct sunlight, by receiving solar radiation, they are ideal for installing photovoltaic elements that take advantage of solar radiation, transforming it into electrical energy and storing it in a storage media, which can later be managed intelligently, using that same energy at times when the cost of energy is high, promoting self-consumption and savings. However, it can also be directly connected to the mains.

Also in a complementary way, not only does the invention consist of providing the slats of the blinds with photovoltaic panels, but in order to make solar capture more efficient, the slat containing the photovoltaic panel can be oriented at a certain angle by rotating it around an axis allowing a greater efficiency of the photovoltaic panels, considerably increasing the energy produced.

Likewise, the structure where the slats with photovoltaic panels are settled, comprises a double orientation system, dividing the guides that comprise the structure where the slats with photovoltaic panels settle into at least 3 subdivisions, which allows the guide and, by extension the slats away from the window at an angle of up to 90°.

Subsequently, by way of fixing means, the orientation of the structure where the slats with photovoltaic panels sit is blocked according to the user's needs.

Unless otherwise indicated, all technical and scientific elements used herein have the meaning that is usually understood by a normal person skilled in the technique to which this invention belongs. Similar or equivalent procedures and materials to those described herein may be used in the practice of the present invention.

Throughout the description and claims, the word "comprises" and its variants are not intended to exclude other technical characteristics, additives, components or steps. For those skilled in the art, other objects, advantages, and features of the invention will emerge in part from the description and in part from the practice of the invention.

### EXPLANATION OF THE FIGURES

To complement the description that is being made and in order to have a better understanding of the characteristics of the invention, according to a preferred example of its practical embodiment, a set of drawings with an illustrative and non-limiting nature is attached as an integral part of said description, where the following has been represented:

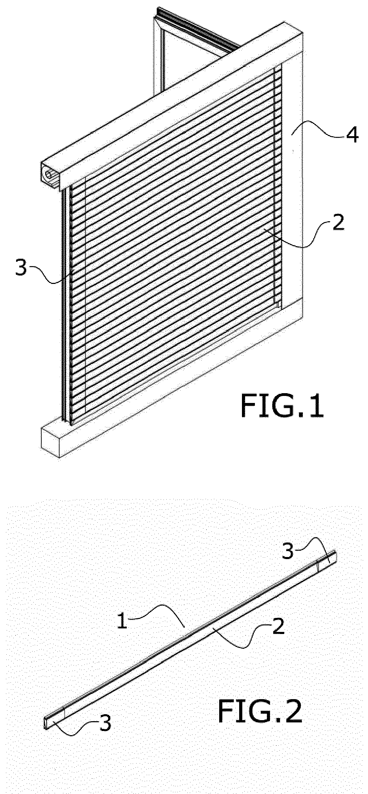

Figure 1 is a perspective representation of the photovoltaic blind installed on a window without one of the guides (4).
Figure 2 is a perspective representation of one of the slats (1) of the photovoltaic blind executed in a way where the slats (1) and the friction surface (3) are the same element.

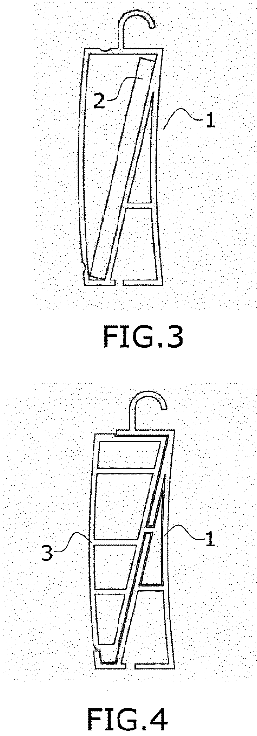

Figure 3 is a representation in profile of one of the slats (1) of the photovoltaic blind executed in a way where the slats (1) and the friction surface (3) are the same element.
Figure 4 is a representation in profile of one of the slats (1) of the photovoltaic blind executed in a way where the slats (1) and the friction surface (3) are different elements by way of temporary joining means.

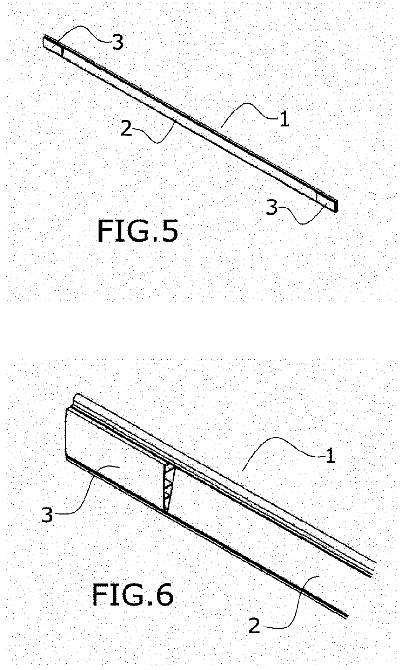

Figure 5 is a perspective representation of one of the slats (1) of the photovoltaic blind executed in a way where the slats (1) and the friction surface (3) are different elements by way of temporary joining means.
Figure 6 is a detailed perspective representation of one of the slats (1) of the photovoltaic blind executed in a way where the slats (1) and the friction surface (3) are different elements by way of temporary joining means.

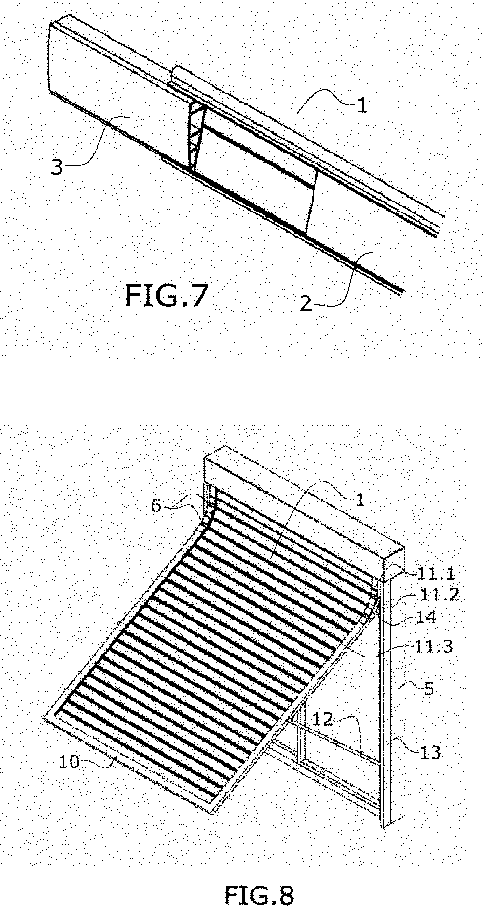

Figure 7 is a detailed perspective representation where one of the friction surfaces (3) is separating from one of the slats (1) of the photovoltaic blind executed in a way where the slats (1) and the surface of friction (3) are different elements by way of temporary joining means.
Figure 8 is a perspective representation of the adjustable photovoltaic blind installed in a window (5).

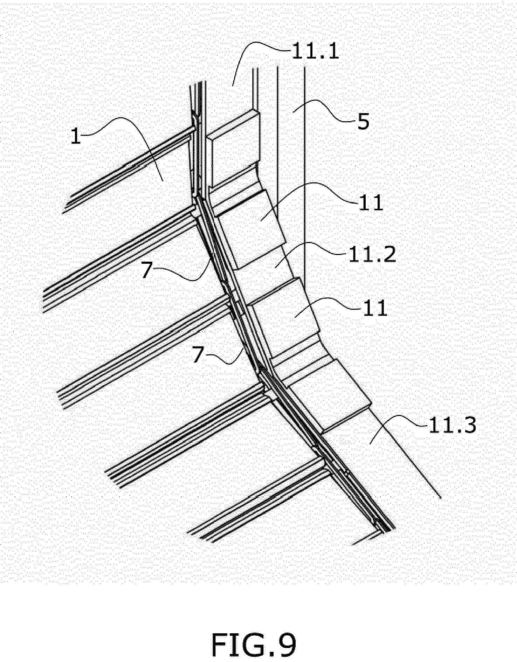

Figure 9 is a detailed perspective representation of the hinges (6).

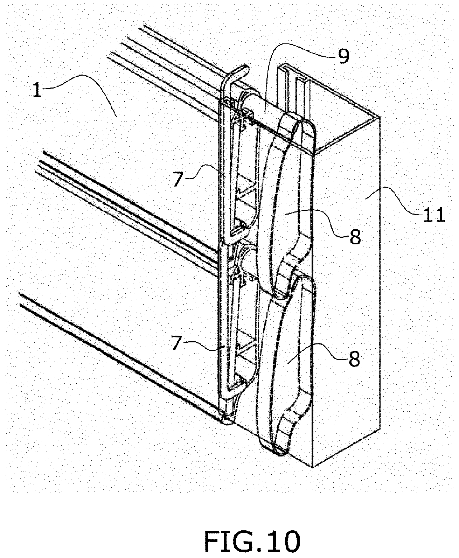

Figure 10 is a detailed perspective representation of the slat (1) in the adapted guides (11).

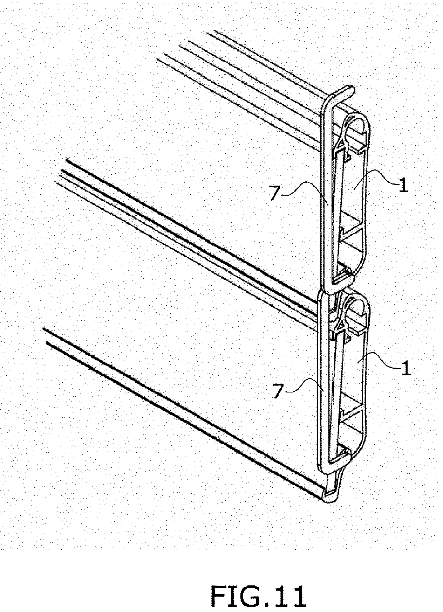

Figure 11 is a detailed perspective representation of the blade (1) and the link (7).
Figure 12 shows the respective slats for blinds with the boxes on the outside of the window and therefore with the concavity changed.

### PREFERRED EMBODIMENT OF THE INVENTION

In view of the figures, a preferred embodiment of the proposed invention is described below.

As can be seen in the figures, the photovoltaic blind is that of a roller blind, comprising a plurality of slats (1) which in turn comprise at least one photovoltaic panel (2) facing outwards, capable of converting solar radiation into electrical energy, which is transferred to electrical storage media. The slats (1) comprise at each end a friction surface (3) adjacent to the photovoltaic panel (2) that is configured to slide along the guides (4), like any roller blind.

Depending on the execution way, the friction surface (3) and the slats (1) are joined in a single element or are different components joined by joining means configured to be a permanent join or a temporary join.

The photovoltaic panels (2) have an inclination with respect to the slats (1) configured to favor the capture of sunlight.

These slats (1) are joined on their sides to a stop (8) by means of an axis (9) configured so that the slat (1) pivots around it. In turn, the slats (1) are joined together by a link (7) configured to adjust the rotation of the slat (1) around the axis (9).

The stops (8) slide along adapted guides (11) that make up a structure (10) that contains the slats (1). The adapted guides (11) are subdivided into a first section (11.1), a second section (11.2) and a third section (11.3), being the first section (11.1) and the second section (11.2) and the third section (11.3) joined together by hinges (6) configured so that when opened it allows the structure (10) that contains the slats (1) to separate from the window (5) and orient itself with respect to it at an angle between 0° and 90°.

Main fixing means (12) are attached to the structure (10) by means of an axis configured to allow the main fixing means (12) to pivot while at the other end it slides along a profile (13) located in the window (5) which at said end comprises locking means configured to lock the orientation of the structure (10).

Secondary fixing means (14) are attached at the end to the second section (11.2) and to the profile (13) configured to block the opening of the second section (11.2) to prevent excessive opening.

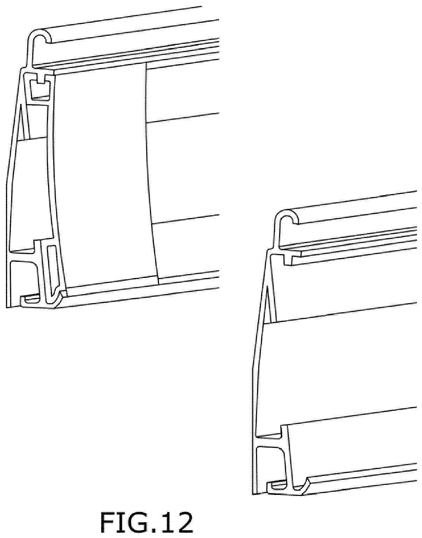

Figure 12 shows respective views where one can see some slats (1) designed for exterior drawers, so the concavity of the slats changes, without changing the essentiality of the object of the invention.

Having sufficiently described the nature of the present invention, as well as the manner of putting it into practice, it is stated that, within its essential nature, it may be put into practice in other execution ways that differ in detail from the one indicated as an example, and to which the protection that is sought will also reach, as long as it does not alter, change or modify its fundamental principle.

## Claims

1. Photovoltaic blind of the roller blind type, comprising a plurality of slats (1) **characterized in that** the slats (1) comprise at least one photovoltaic panel (2) facing the outside of the home, capable of converting solar radiation into electrical energy, which is transferred to electrical storage media.

2. Photovoltaic blind according to the preceding claim, **characterized in that** the slats (1) comprise at each end a friction surface (3) adjacent to the photovoltaic panel (2) that is configured to slide along the guides (4), like any roller blind.

3. Photovoltaic blind according to any of the claims, **characterized in that** the photovoltaic panels (2) have an inclination with respect to the slats (1) configured to favor the capture of sunlight.

4. Photovoltaic blind according to any of the claims, **characterized in that** the friction surface (3) and the slats (1) form a single element.

5. Photovoltaic blind according to claim 4, **characterized in that** the friction surface (3) and the slats (1) are different components joined by means of connection configured to make a permanent connection.

6. Photovoltaic blind according to claim 4, **characterized in that** the friction surface (3) and the slats (1) are different components joined by means of connection configured to make a temporary connection.

7. Adjustable photovoltaic blind of the roller blind type according to claim 1, **characterized in that** the slats (1) are attached on their sides to a stop (8) by means of an axis (9) configured so that the slat (1) pivots around. In turn, the slats (1) are joined together by a link (7) configured to adjust the rotation of the slat (1) around the axis (9).

8. Adjustable photovoltaic blind according to the preceding claim, **characterized in that** the stops (8) slide along guides (11) that make up a structure (10) that contains the slats (1) and that these guides (11) are subdivided into a first section (11.1), a second section (11.2) and a third section (11.3), the first section (11.1), the second section (11.2) and the third section (11.3) being joined together by hinges (8) configured so that when opened it allows the structure (10) that contains the slats (1) to separate from the window (5) and to be oriented with respect to it at an angle between 0° and 90°.

9. Adjustable photovoltaic blind according to the preceding claim, **characterized in that** it comprises main fixing means (12) that are attached to the structure (10) by means of an axis configured to allow the main fixing means (12) to pivot, while on the other end slides along a profile (13) located in the window (5) which at said end includes locking means configured to lock the orientation of the structure (10).

10. Adjustable photovoltaic blind according to claims 8 and 9, **characterized in that** it comprises secondary fixing means (14) that are attached at one end to the second section (11.2) and to the profile (13) configured to block the opening of the second section (11.2).
